# EUROPEAN PATENT SPECIFICATION

(11) **EP 2 617 775 B1**
(45) Date of publication and mention of the grant of the patent: **04.03.2015**
(21) Application number: 13163966.8
(22) Date of filing: 23.07.2010
(51) Int. Cl.: C08L 83/08, C09D 183/08, C08K 5/103, C08K 5/54, C08L 101/04, C09D 201/04

(54) **Fluorinated hybrid compositions**
Fluorierte Hybridzusammensetzungen
Compositions hybride fluorées

(30) Priority: 23.07.2009 US 227827 P
(43) Date of publication of application: 24.07.2013
(62) Divisional of application: 10737450.6
(73) Proprietor: E. I. du Pont de Nemours and Company, Wilmington, DE 19898 (US)
(72) Inventor: Wilczek, Lech, Wilmington, DE Delaware 19810 (US)
(74) Representative: Matthews, Derek Peter

(56) References cited:
- WO-A2-2011/011653
- WO-A2-2011/011655
- JP-A- 63 301 268
- US-A- 5 405 929
- US-A1- 2003 008 999
- US-B1- 6 204 350

## Description

### BACKGROUND

The present invention relates to fluoropolymer coatings formulated for optical applications, and articles comprising them.

Fluoropolymers have been used as components of coatings in many applications. However, they can be limited in properties such as mechanical strength, scratch resistance, and adhesion. A continuing need exists for coating formulations which provide improved performance characteristics after application, and particularly a good balance of adhesion, mechanical properties, scratch resistance, low surface energy, repellency, and transparency when useful as a topcoat, particularly in optical applications.

US 6,204,350 discloses fluorosilicone polymers useful as pressure-sensitive adhesives and in release sheets. US 2003/0008999 discloses a neutral, room temperature condensation curable fluorosilicone sealant and an oligomeric fluorosilicone crosslinker.

### SUMMARY

Described herein is a composition comprising:
a) optionally a Component (I), wherein Component (I) is a fluorine-containing polymer having a weight average molecular weight from 600 to 100,000, optionally having reactive functional groups;
b) 0.1 to 75 weight% of a Component (II), wherein Component (II) is a fluorine- and silicon-containing polymer having a weight average molecular weight from 600 to 100,000, having reactive functional groups;
c) 5 to 99.9 weight% of a Component (III), wherein Component (III) is a reactive diluent having a weight average molecular weight less than 600 and having at least one functional group;
d) 0 to 20 weight% of a Component (IV), wherein Component (IV) is a fluorine-containing non-functional oligomer or polymer having a number average molecular weight less than 10,000; and
e) 0 to 80 weight% of a Component (V) comprising inorganic particles;
wherein 0.1 to 95 weight% of the composition is Component (II) and optionally Component (I), 5 to 99.9 weight% of the composition is Component (III), and the remainder of the composition being one or both of Components IV and V, wherein all the weight percentages are based on the total weight of the Components I to V, and with the proviso that Component (I) is not identical to Component (IV) when both are present.

### DETAILED DESCRIPTION

### Composition

Disclosed herein is a composition, articles with a coating comprising the composition, and a method of coating, comprising a fluoropolymer or fluoro- and silicon-polymer, with a reactive diluent, and optionally non-reactive oligomeric fluoro-additives, crosslinkers, or inorganic particles, which upon curing provides coatings with a good balance of adhesion, mechanical properties, scratch resistance, low surface energy, repellency, transparency useful as a topcoat, particularly in optical applications

Described herein is a composition, comprising:
a) optionally a Component (I), wherein Component (I) is a fluorine-containing polymer having a weight average molecular weight from 600 to 100,000, optionally having reactive functional groups;
b) 0.1 to 75 weight% of a Component (II), wherein Component (II) is a fluorine- and silicon-containing polymer having a weight average molecular weight from 600 to 100,000, having reactive functional groups;
c) 5 to 99.9 weight% of a Component (III), wherein Component (III) is a reactive diluent having a weight average molecular weight less than 600 and having at least one functional group;
d) 0 to 20 weight% of a Component (IV), wherein Component (IV) is a fluorine-containing non-functional oligomer or polymer having a number average molecular weight less than 10,000; and
e) 0 to 80 weight% of a Component (V) comprising inorganic particles;
wherein 0.1 to 95 weight% of the composition is Component (II) and optionally Component (I), 5 to 99.9 weight% of the composition is Component (III), and the remainder of the composition being one or both of Components IV and V, wherein all the weight percentages are based on the total weight of the Components I to V, and with the proviso that Component (I) is not identical to Component (IV) when both are present.

The weight percentages are based on the total weight of the Components (I) through (V) in the uncured composition. Each component may comprise more than one individual composition, provided that each individual composition is as defined for that component. The weight percentage of that component would therefore be the sum of the individual compositions in that component.

By "functional group" is meant polymerizable multi-functional and also not polymerizable mono-functional reactive groups. By "polymerizable group" is meant a reactive multi-functional group that has the capacity to form two or more additional covalent bonds resulting in macromer interlinking. Polymerizable groups specifically include groups capable of polymerizing via free radical polymerization and groups capable of polymerizing via cationic, anionic, coordination, ring opening, addition or heterolytic polymerization. Suitable functional groups include, but are not limited to, ethylenically or acetylenically unsaturated groups such as hydrocarbyl groups, isocyanates, cyclic ethers such as but not limited to epoxides, oxiranes, cyclic acetals, sulfhydryls, succinimides, maleimides, amines, imines, amides, imides, anhydrides, cyano groups, carboxylic acids, hydroxyl groups, sulfonic acids, silane and phosphate groups. Ethylenically unsaturated groups include vinyl groups such as vinyl ethers, N-vinyl amides, allyl groups, unsaturated monocarboxylic acids, unsaturated dicarboxylic acids, and unsaturated tricarboxylic acids, and the corresponding unsaturated acid esters. Unsaturated monocarboxylic acids include acrylic acid, methacrylic acid and crotonic acid. Unsaturated dicarboxylic acids include maleic, fumaric, itaconic, mesaconic or citraconic acid. Unsaturated tricarboxylic acids include aconitic acid. Polymerizable groups may also be derivatives of such materials, such as acrylamide, N-isopropylacrylamide, hydroxyethylacrylate, hydroxyethylmethacrylate, and analogous vinyl and allyl compounds. Functional silane groups include, but are not limited to unsaturated vinyl, allyl, acrylate, methacrylate silane groups, alkoxy, acyloxy, phenoxy, halogen, amine, amide, urea, imidazole, carbamate, ketoximine and oxazolidinone silane groups. Reactive group forming compounds will preferably be available in a stable activated form, to allow simple incorporation into the macromer. Examples of such materials are (meth) acrylyl chloride, acrylic anhydride, and allyl glycidyl ether. The polymerizable groups are preferably located at one or more ends of the macromer. In another embodiment, the polymerizable groups can be located within the macromer.

The composition described above can be used as a coating. In some embodiments the coating can have low surface energy and therefore high repellency, smudge-resistance, antireflective properties, scratch resistance, and/or good transparency, thereby enabling the coating to be useful for many applications such as optical applications. The coating described here can have a thickness of 0.5 nm to 100 microns, 1 nm to 15 microns, or 1 nm to 1 micron.

Also described herein is a coating on a substrate. The substrate can be an optical display substrate, such but not limited to cathode ray tube displays (CRTs), plasma display panels (PDPs), electroluminescence displays (ELDs), and liquid crystal displays (LCDs), display surfaces or panels, optical lenses, windows, optical polarizers, optical filters, glossy prints and photographs, clear polymer films, and the like. Substrates may be either transparent or anti-glare and include but are not limited to acetylated cellulose (e.g., triacetyl cellulose (TAC)), polyester (e.g., polyethylene terephthalate (PET)), polycarbonate, polymethylmethacrylate (PMMA), polyacrylate, polyvinyl alcohol, polystyrene, glass, vinyl, nylon, and the like. Preferred substrates are TAC, PET and PMMA. The substrates optionally have one or more additional coatings such as a hardcoat applied between the substrate and the instant coating, such as but not limited to an acrylate hardcoat.

### Component (I)

Component (I) comprises a fluorine-containing polymer having a weight average molecular weight from about 600 to about 100,000, optionally having reactive functional groups. By "fluorine-containing polymer", also known as fluoropolymer, it is meant polymer in which at least 10% of the total number of halogen and hydrogen atoms are fluorine atoms. For purposes of this application, fluorine-containing polymers are obtained from fluorine-containing vinyl monomers including fluoroolefins (e.g., fluoroethylene, vinylidene fluoride, tetrafluoroethylene, and hexafluoropropylene), partially or completely fluorinated alkyl ester derivatives of (meth)acrylic acid, and partially or completely fluorinated vinyl ethers. From this viewpoint, the fluorine-containing vinyl monomer is generally used to give a fluorine content of about 10% to about 70% by weight, or about 30% to about 50% by weight, in the resulting, optionally cross-linkable, polymer.

In one embodiment, Component (I) is a fluoroelastomer. Fluoroelastomers comprise repeating units arising from two or more types of monomers and optionally have cure sites allowing for crosslinking to form a three dimensional network. A first monomer type gives rise to straight fluoroelastomer chain segments with a tendency to crystallize. A second monomer type having a bulky group is incorporated in to the fluoroelastomer chain at intervals to break up such crystallization tendency and produce a substantially amorphous elastomer. Monomers of utility for straight chain segments are those without bulky substituents and include, but are not limited to, vinylidene fluoride (VDF), CH₂=CF₂; tetrafluoroethylene (TFE), CF₂=CF₂; chlorotrifluoroethylene (CTFE), CF₂=CFCI; and ethylene (E), CH₂=CH₂. Monomers with bulky groups useful for disrupting crystallinity include hexafluoropropylene (HFP), CF₂=CFCF₃; 1-hydropentafluoropropylene, CHF=CFCF₃; 2-hydropentafluoropropylene, CF₂=CHCF₃; perfluoro(alkyl vinyl ether)s (e.g., perfluoro(methyl vinyl) ether (PMVE), CF₂=CFOCF₃); and propylene (P), CH₂=CHCH₃. Fluoroelastomers are generally described by A. Moore in Fluoroelastomers Handbook: The Definitive User's Guide and Databook, William Andrew Publishing, ISBN 0-8155-1517-0 (2006).

Fluoroelastomers comprising ethylene, tetrafluoroethylene, perfluoro(alkyl vinyl ether) and a bromine-containing cure site monomer, such as those disclosed by Moore, in U.S. Patent 4,694,045, are of utility in the compositions of the present invention. Also of utility in the present invention are the Viton® GF-series fluoroelastomers, for example Viton® GF-200S, available from DuPont Performance Elastomers, DE, USA.

In another embodiment Component (I) is a perfluorinated polymer containing ether linkages, optionally having reactive functional groups such as acrylate, such as E10-DA perfluoropolyether diacrylate oligomer, available from Sartomer Company, Inc., Exton, PA, USA.

In another embodiment Component (I) contains at least one reactive functional group.

In one embodiment Component (I) is present at a weight% of about 0.1 %, or about 0.5%, to about 1%, or about 2% based on the total weight of the Components (I) to (V) in the instant composition.

In another embodiment Component (I) has a weight average molecular weight from about 10,000 to about 70,000.

### Component (II)

Component (II) comprises a fluorine- and silicon-containing polymer having a weight average molecular weight from about 600 to about 100,000, having reactive functional groups, as defined above. By "fluorine- and silicon-containing polymer" it is meant a fluorine-containing polymer as defined above, additionally containing one or more silicon functional groups or silicon non-reactive groups, or a polymer containing silicon in the polymer backbone with low molecular weight fluorine- containing substituents/segments.

Component (II) is described by Formula (II) 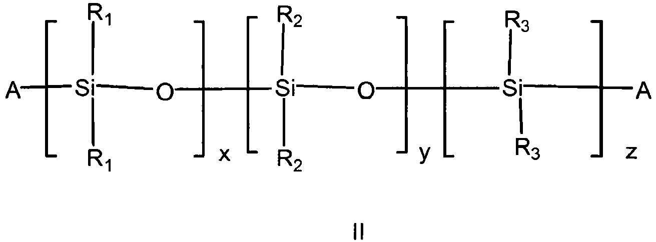 where A is a reactive functional group, R₁-R₆ are each independently a C₁-C₆ alkyl group, optionally containing ether linkages, wherein at least one R is at least partially fluorinated, and x, y, and z are integers indicating the number of repeat units in the polymer, wherein at least one of x, y, and z is greater than 0. Typically A is a hydroxyl, silane, amine, unsaturated monocarboxylic acid, or ethylenically unsaturated group. More typically A is hydroxyl or -CH=CH₂.

In one embodiment Component (II) is present at a weight% of 0.1 to 75% based on the total weight of the Components (I) through (V) in the instant composition. In another embodiment, Component (II) is present at a weight% of from about 0.1%, or about 4%, or about 10%, or about 25%, to about 30%, or about 65%, or about 75%.

In one embodiment Component (II) has a weight average molecular weight from about 600 to about 3,000.

### Component (III)

Component (III) comprises a reactive diluent having a weight average molecular weight less than about 600 and having at least one functional group.

By "reactive diluent" is meant an oligomer with at least one polymerizable multi-functional reactive group but not polymerizable mono-functional reactive groups, as defined above. Suitable reactant diluents include but are not limited to fluorine- containing, silicon-containing, fluorine- and silicon-containing oligomers. Reactive diluents, also called reactive diluting media or reactive solvents, are typically liquid compounds with a molecular weight of about 200 to less than about 600 g/mole, and represent a simplified expression for the longer designation according to DIN 55945: 1996-09 (Deutsches Institut für Normung, Paints and Varnishes), which describes diluting agents which initially act as solvents in the coating composition and which, in the course of film formation undergo chemical reaction through self-crosslinking independently from the binder or are covalently incorporated into the binder by means of reactive groups to become part of the binder. They are typically olefinically unsaturated monomers containing at least one double bond, in particular at least two double bonds. Examples include but are not limited to 1,3-butanediol diacrylate, 1,4-butanediol diacrylate, 1,6-hexanediol diacrylate, trimethylolpropane methyl ether diacrylate, hexanediolethoxylated diacrylate, hexanediolpropoxylated diacrylate, pentaerythritol triacrylate, trimethylolpropane triacrylate, pentaerythritol tetraacrylate, dipentaerythritol penta/hexa acrylates, and silane functional reactive diluents such as hydrolytically reactive alkoxy-, carboxy-, amino-, aminoxy-, halogeno- substituted silanes. Reactive diluents are generally described in Roempp Lexikon Lacke und Druckfarben, Georg Thieme Verlag, Stuttgart, N.Y., 1998, page 491, "Reactive diluents".

In one embodiment Component (III) is present at a weight% of about 5% to about 99.9 % based on the total weight of the Components (I) through (V) in the instant composition. In another embodiment, Component (III) is present at a weight% of from about 15%, or about 30%, to about 80%, or about 95%.

In one embodiment Component (III) is present at a weight average molecular weight from about 200 to less than about 600.

In one embodiment, Component (III) comprises Component (IIIa), which comprises a fluorine-containing reactive diluent having a weight average molecular weight less than about 600 and having at least one functional group, including but not limited to one or more acrylate groups, such as 2,2,3,3,4,4,5,5- octafluro-1,6-hexanediol diacrylate and 2,2,3,3-tetrafluoro-1,4-butadiol diacrylate.

In another embodiment, Component (III) comprises Component (IIIb), which comprises a silicon-containing reactive diluent having a weight average molecular weight less than about 600 and having at least one functional group, including but not limited to a silane substituted with alkyl or alkyloxy groups, such as tetraethoxysilane, methyltrimethoxysilane, octyltrimethoxysilane, phenyltrimethoxysilane, methyltriacetoxysilane, and methyltris(dimethylamino)silane.

In another embodiment, Component (III) comprises Component (IIIc), which comprises a fluorine- and silicon-containing reactive diluent having a weight average molecular weight less than about 600 and having at least one functional group, including but not limited to a silane substituted with fluorinated alkyl or alkyloxy groups, such as 1H,1H,2H,2H-perfluorodecyltriethoxysilane and 1H,1H,2H,2H-perflurooctyltrimethoxysilane.

### Component (IV)

Component (IV) comprises a fluorine-containing non-functional oligomer or polymer having a number average molecular weight less than about 10,000. By "fluorine-containing non-functional oligomer or polymer" it is meant a fluorine-containing oligomer or polymer limited to weight average molecular weight less than about 10,000 and having no functional group. The fluorine-containing oligomers are obtained from fluorine-containing vinyl monomers including fluoroolefins (e.g., fluoroethylene, vinylidene fluoride, tetrafluoroethylene, and hexafluoropropylene), partially or completely fluorinated alkyl ester derivatives of (meth)acrylic acid, and partially or completely fluorinated vinyl ethers. The fluorine-containing vinyl monomer is generally used to give a fluorine content of about 10%, or about 30%, or about 50% by weight, to about 50%, or about 70%, or about 90% by weight, in the resulting, optionally cross-linkable, polymer. One embodiment of suitable oligomers or polymers is perfluoropolyethers, also called perfluoropolyalkylethers. Another embodiment is oligomers with the chemical structure: F-(CF(CF₃)-CF₂-O)ₙ-CF₂CF₃ where n is about 10 to about 60. One suitable example is the class of Krytox® fluorinated oils, (available from E. I. duPont de Nemours and Company, Wilmington, DE).

In one embodiment, the number average molecular weight of Component (IV) is about 3,000 to about 8,000.

In one embodiment Component (IV) is present at a weight% of about 0 to about 20 % based on the total weight of the Components (I) to (V) in the instant composition. In another embodiment Component (IV) is present at a weight% of from about 0.1 % or about 5%, to about 13%, or about 20 %.

### Component (V)

Component (V) comprises inorganic particles.

In one embodiment Component (V) is present at a weight% of about 0 to about 80% based on the total weight of the Components (I) through (V) in the instant composition. In another embodiment, Component (V) is present at a weight% of from about 0.1 %, or about 5%, or about 10%, or about 20%, to about 30%, or about 40%, or about 80%.

The inorganic particles are typically inorganic oxides, such as but not limited to silicon oxide, titanium oxide, aluminum oxide, antimony oxide, zirconium oxide, indium tin oxide, antimony tin oxide, mixed titanium/tin/zirconium oxides, and binary, ternary, quaternary and higher order composite oxides of one or more cations selected from titanium, aluminum, antimony, zirconium, indium, tin, niobium, tantalum, and zinc. More than one type of particle may be used in combination. In other cases, particle composites (e.g. single or multiple core/shell structures) can be used, in which one oxide encapsulates another oxide in one particle. The particles can also be surface functionalized.

The particles can be any shape, including spherical and oblong, and are typically relatively uniform in size and remain substantially non-aggregated. They can be hollow, porous, or solid. The diameter of the particles is less than about 100 micron, preferably less than 70 micron.

In one embodiment, the particles are conductive or semiconductive, to produce a coating with antistatic properties. Typical metal containing particles that can be used in this embodiment include indium tin oxide, antimony tin oxide, Sb₂O₃, Sb₂O₅, In₂O₃, SnO₂, antimony zinc oxide, zinc oxide, aluminum-zinc oxide, tungsten oxide, molybdenum oxide, vanadium oxide and iron oxide.

### Method for Coating

Described herein is a method for preparing a coating on a substrate, comprising the steps of:
a) providing a coating composition in a suitable solvent, said coating composition comprising:
   (i) optionally a Component (I), wherein Component (I) is a fluorine-containing polymer having a weight average molecular weight from 600 to 100,000, optionally having reactive functional groups;
   (ii) 0.1 to 75 weight% of a Component (II), wherein Component (II) is a fluorine- and silicon-containing polymer having a weight average molecular weight from 600 to 100,000, having reactive functional groups;
   (iii) 5 to 99.9 weight% of a Component (III), wherein Component (III) is a reactive diluent having a weight average molecular weight less than 600 and having at least one functional group;
   (iv) 0 to 20 weight% of a Component (IV), wherein Component (IV) is a fluorine-containing non-functional oligomer or polymer having a number average molecular weight less than 10,000; and
   (v) 0 to 80 weight% of a Component (V) comprising inorganic particles;
   wherein 0.1 to 95 weight% of the coating composition is Component (II) and optionally Component (I), 5 to 99.9 weight% of the coating composition is Component (III), and the remainder of the coating composition being one or both of Components (I) through (V), wherein all the weight percentages are based on the total weight of the Components (I) through (V), and with the proviso that Component (I) is not identical to Component (IV) when both are present;
b) applying the coating composition to a substrate;
c) optionally, at least partially removing the solvent from the coating composition; and
d) curing the coating composition.

The coating can be prepared in step (b) by any method known in the art. One suitable process includes coating the composition on a substrate in a single coating step to form a liquid mixture coating on the substrate. The composition can optionally be combined with a suitable solvent before coating. Coating techniques useful for applying the composition onto the substrate in a single coating step are those capable of forming a thin, uniform layer of liquid on a substrate, such as microgravure coating as described in US Patent Publication No. 2005/187333.

Suitable solvents include those that do not adversely affect the curing properties of the composition or attack the substrate, and can be a single solvent or a mixture of suitable solvents. Additionally, the solvent is chosen such that the addition of the solvent to the uncured composition does not result in flocculation of any particles present in the composition. Furthermore, the solvent should be selected such that it has an appropriate drying rate. It should also not dry too quickly, which can cause defects such as pinholes or craters in the resultant coating. Solvents of utility include but are not limited to polar aprotic organic solvents, and representative examples include aliphatic and alicyclic: ketones such as methyl ethyl ketone and methyl isobutyl ketone; esters such as propyl acetate; ethers such as di-n-butyl ether; and combinations thereof. Preferred solvents include propyl acetate and methyl isobutyl ketone. In another embodiment, the solvent could contain fluorine, which is particularly useful for polymers containing high level of fluorine.

The process can include a step (c) of at least partially removing the solvent from the liquid mixture coating on the substrate to form a coating on the substrate. The solvent can be removed by known methods, for example, heat, vacuum, and/or a flow of inert gas in proximity to the coated liquid dispersion on the substrate. If heat is used to remove the solvent it is typically performed by heating the coated substrate at a temperature of greater than ambient and less than about 100 °C, or less than about 70 °C, for up to about three hours, or between 2 and 3 hours, optionally under conditions of high humidity, particularly for moisture curable silane groups. If a flow of inert gas is used it is typically performed by flowing nitrogen gas over the coated substrate for a time of up to about 10 minutes, or about 1 to about 3 minutes.

The coating process can also include a step (d) of curing the liquid mixture coating on the substrate. By "curing" is meant that the crosslinkable and/or reactive components of the coatings are substantially crosslinked and/or reacted, to form a "cured" coating. By the term "substantially ", is meant that at least half of the curing has occurred, although further curing may occur over time.

The uncured coating is preferably cured by a free radical mechanism. Free radicals may be generated by known methods such as by the thermal decomposition of organic peroxide, optionally included in the uncured composition, or by radiation such as ultraviolet (UV) radiation, gamma radiation, or electron beam radiation. If radiation was used, the coated substrate would typically be exposed to the radiation, optionally at an elevated temperature, for about 1 to about 10 minutes. The uncured coatings could be also cured by silicone chemistry such as hydrosilation involving hydrosilanes or hydrolytic condensation of silanes containing groups undergoing hydrolysis to reactive silanols, which easily condense forming stable siloxane bonds. The hydrosilation can be accomplished either using free radical initiators or various other catalysts, including transition metals, particularly from the Group VIII metals such as platinum or rhodium. A catalyst is typically added to catalyze the hydrolysis and condensation of hydrolysable silanes. Typical catalysts include but are not limited to medium and strong acids or bases, amines, tin containing compounds such as dibutyltin dilaurate, dibutyltin diacetate, dibutyltin dioctoate, dibutyltin dioxide; titanates such as tetraisopropyl titanate, tetrabutyl titanate (e.g., DuPont Tyzor® organic titanates), aluminum titanate, aluminum chelates, zirconium chelates and the like.

### Article

The method yields a substrate coated with the reaction product of the composition, or a dried and cured coating, as described above, or an article comprising said substrate.

Substrates suitable for the coating described herein find use on articles such as display surfaces, display panels, optical lenses, windows, optical polarizers, optical filters, optical display substrate, such but not limited to cathode ray tube displays (CRTs), plasma display panels (PDPs), electroluminescence displays (ELDs), and liquid crystal displays (LCDs), glossy prints and photographs, clear polymer films, and the like. Substrates may be transparent, anti-smudge or anti-glare and include but not limited to acetylated cellulose (e.g., triacetyl cellulose (TAC)), polyester (e.g., polyethylene terephthalate (PET)), polycarbonate, polymethylmethacrylate (PMMA), polyacrylate, polyvinyl alcohol, polystyrene, glass, vinyl, nylon, and the like. Preferred substrates are TAC, PET, PMMA, and glass. The substrates optionally can have other coatings, which may be the same or different from than the coating described herein, applied either between the substrate and the instant coating, or on top of the instant coating. In one embodiment the article has a hardcoat applied between the substrate and the coating, such as but not limited to an acrylate hardcoat, and optionally including an antistat layer applied on top of the hardcoat or the instant coating.

The instant coating can optionally contain other additives such as surfactants, antistatic agents (organic or inorganic), leveling agents, photosensitizers, ultraviolet absorbers, stabilizers, antioxidants, lubricants, pigments, dyes, plasticizers, suspending agents and the like.

### EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "cm" means centimeter(s), "nm" means nanometer(s), "sec" means second(s), "mm" means millimeter(s), "g" means gram(s), "min" means minute(s), "deg" means degree(s), "h" means hour(s), "MW" means molecular weight, and "wt%" means weight percent(age).

### Measurement of Specular Reflectance (RVIS and RMIN)

A 3.7 cm x 7.5 cm piece of substrate film coated with an antireflective coating of the present invention is prepared for measurement by adhering a strip of black PVC electrical tape (Nitto Denko, PVC Plastic tape #21) to the uncoated side of the film, in a manner that excludes trapped air bubbles, to frustrate the back surface reflections. The film is then held at normal to the spectrometer's optical path. The reflected light that is within about 2 degrees of normal incidence is captured and directed to an infra-red extended range spectrometer (Filmetrics, model F50). The spectrometer is calibrated between 400 nm and 1700 nm with a low reflectance standard of BK7 glass with its back surface roughened and blackened. The specular reflection is measured at normal incidence with an acceptance angle of about 2 degrees. The reflection spectrum is recorded in the range from 400 nm to 1700 nm with an interval of about 1 nm. A low noise spectrum is obtained by using a long detector integration time so that the instrument is at full range or saturated with about a 6% reflection. A further noise reduction is achieved by averaging 3 or more separate measurements of the spectrum. The reflectance reported from the recorded spectrum is the result of a color calculation of x, y, and Y where Y is reported as the specular reflectance (RVIS). The color coordinate calculation is performed for a 10 degree standard observer with a type C light source.

### Haze

Haze is measured according to the method of ASTM D 1003, "Standard Test Method for Haze and Luminous Transmittance of Transparent Plastics", using a "BYK Gardner Haze-Guard Plus" available from BYK-Gardner USA, Columbia, MD.

### Surface Abrasion

A 3.7 cm by 7.5 cm piece of substrate film coated with an antireflective coating of the present invention is mounted, with the coated surface up, onto the surface of a flat glass plate by fastening the edges of the film to the plate with adhesive tape. Liberon grade #0000 steel wool is cut into patches slightly larger than 1 by 1 cm. A soft (compliant) foam pad cut to 1 by 1 cm is placed over the steel wool pad and a 200-gram brass weight held in a slip fit Delrin® sleeve is placed on top of the foam pad. The sleeve is moved by a stepping motor driven translation stage model MB2509P5J-S3 CO18762. A VELMEX VXM stepping motor controller drives the stepping motor. The steel wool and weight assembly are placed on the film surface and rubbed back and forth over the film surface, for 10 cycles (20 passes) over a distance of 3 cm at a velocity of 5 cm/sec.

### Quantifying Surface Abrasion

The present Method involves imaging an abraded film and quantifying the scratched percent area on the abraded film by software manipulation of the image.

No single image analysis procedure covering all possibilities exists. One of ordinary skill in the art will understand that the image analysis performed is very specific. General guidance is given here with the understanding that unspecified parameters are within the ability of the practitioner of ordinary skill to discern without undue experimentation.

This analysis assumes there are both "on axis" and "off axis" illumination of the sample and the image is taken in reflected light at about 7 degrees from normal incidence. It is also assumed that the scratches are in a vertical orientation in the image. Appropriate image contrast can be established without undue experimentation by the practitioner or ordinary skill. Image contrast is controlled by the lighting intensity, the camera white and dark reference settings, the index of refraction of the substrate, the index of refraction and the thickness of the low refractive index composition. Also to increase the contrast of the image a piece of black electrical tape is adhered to the back of the substrate. This has the effect of frustrating the back surface reflection.

The image used for analyzing the scratched area on the film is obtained from a video camera connected to a frame grabber card in a computer. The image is a grey scale 640 by 480 pixel image. The optics on the camera magnifies the abraded area so that the width of the imaged region is 7.3 mm (which is most of the 1 cm wide region that is abraded.)

The Adobe PhotoShop V7 with Reindeer Graphic's Image Processing Toolkit plug-ins for PhotoShop is used to process the image as described below.

First the image is converted to a grey scale image (if it is not already). A motion blur of 25 pixels in the direction of the scratches is performed to emphasize the scratches and de-emphasize noise and extraneous damage to the film. This blur does three things to clean up the image. First, damage to the film in other directions than the abrasion direction is washed out by averaging with the background. Second, individual white dots are removed by averaging with the background. Third, any small gaps in the scratches are filled in by averaging between the in line scratches.

In preparation for an automatic contrast adjustment of the pixel intensities in the image, four pixels near the upper left corner are selected. These pixels are filled in at an intensity of 200 (out of 255). This step assures that there is some mark in the image that is other than the dark background of the un-abraded material, in the event that there are no bright scratches in the image. This has the effect of limiting the automatic contrast adjustment. The automatic contrast adjustment used is called "histogram limits: max - min" which alters the contrast of the image so that the histogram fills the 0 to 255 levels available in an 8-bit grey scale image.

A custom filter is then applied to the image that takes a derivative in the horizontal direction and then adds back the original image to the derivative image. This has the effect of emphasizing the edges of vertical scratches.

A bi-level threshold is applied at the 128 grey level. Pixels at a level of 128 or higher are set to white (255) and pixels below a brightness of 128 are set to black (0). The image is then inverted making the black pixels white and the white pixels black. This is to accommodate the global measurement feature used in the final step, which is the application of the global measurement of the black area. The result is given in terms of the percent of black pixels in the image. This is the percent of the total area that is scratched by Method 1 (i.e., scratched%). The entire procedure takes a few seconds per image. Many abraded samples can be evaluated quickly and repeatably by this Method independent of a human operator required in conventional methods.

### Surface Tension

The surface tension of the sample was analyzed by measuring the contact angle of the specified liquid on the surface using the sessile drop method.

### Example 1

An uncured composition was formed containing: (1) Component (II): 0.2 g CH₂=CHSi(CH₃)₂O[Si(CH₃)(CH₂CH₂CF₃)O]ₓ(CH₃)₂SiCH=CH₂ (vinyl telechelic-terminated polytrifluoropropylmethylsiloxane, with polyhydromethylsiloxane crosslinker, molecular weight (MW) greater than 1,000 and Pt catalyst, F065, available from Gelest, Inc., Morrisville, PA, USA), (2) Component (III): 0.05g F(CF₂)₈CH₂CH₂Si(OCH₂CH₃)₃, (3) Component (IV): 0.03 g fluorinated oil Krytox® GPL105, molecular weight of 300-900 (available from E. I. duPont de Nemours and Company, Wilmington, DE ), (4) 0.02 g 10 wt% in toluene of Pt/ViSiO complex (SIP 6830.3 available from Gelest, Inc., Morrisville, PA), (5) 0.1 g trifluoroacetic acid, (6), 1 g propyl acetate and (7) 5 g toluene. The uncured composition was coated on glass plates (from Motorola) by immersing the plates for 30 min. in the uncured composition, followed by brief dipping into toluene to remove the composition excess, heating the coated glasses at 65 °C for 3 hours in an oven with high humidity from water in an open container and finally baking at 120 °C for 1.5 hours in a vacuum oven. The resultant clear transparent colorless coating had a low surface tension (< 18 dynes/cm) as indicated by high contact angles of water (106 deg), diiodomethane (93 deg) and hexadecane (69 deg), and visual scratch resistance to whipping with a paper.

### Example 2

An uncured composition was formed containing: (1) Component (II): 0.2 g CH₂=CHSi(CH₃)₂O[Si(CH₃)(CH₂CH₂CF₃)O]x(CH₃)₂SiCH=CH₂ (vinyl telechelic-terminated polytrifluoropropylmethylsiloxane, with polyhydromethylsiloxane crosslinker, molecular weight greater than 1,000, and Pt catalyst, F065, available from Gelest, Inc., Morrisville, PA), (2) Component (III): 0.1 g F(CF₂)₈CH₂CH₂Si(OCH₂CH₃)₃, (3) Component (IV): 0.02 g fluorinated oil Krytox® GPL105 molecular weight of 300-900 (available from E. I. duPont de Nemours and Company, Wilmington, DE), (4) 0.03 g 10 wt% in toluene of Pt/ViSiO complex (SIP 6830.3 available from Gelest, Inc., Morrisville, PA), (5) 0.1 g trifluoroacetic acid, (6), 1 g propyl acetate and (7) 6 g toluene. The uncured composition was coated on glass plates (Motorola) by immersing the plates for 30 min. in the uncured composition, followed by rinsing with propyl acetate to remove the composition excess, heating the coated glasses at 65 °C for 2.5 hours in an oven with high humidity from water in an open container and finally baking at 120 °C for 2 hours in a vacuum oven. The resultant clear transparent colorless coating had low surface tension (< 18 dynes/cm) as indicated by high contact angles of water (104 deg), diiodomethane (87 deg) and hexadecane (63 deg) and visual scratch resistance to whipping with a paper.

### Example 3

An uncured composition was formed containing: (1) Component (II): 0.06 g HO(Si(CH₃)(CH₂CH₂CF₃)O)ₓH (silanol terminated polytrifluoropropylmethylsiloxane molecular weight of 800-1200, FMS-9922, Gelest), (2) Component (III): 0.015 g CH₂=CHC(O)OCH₂(CF₂)₄CH₂ O(O)CCH=CH₂ (2,2,3,3,4,4,5,5-octafluoro-1,6-hexanediol diacrylate, MW = 370), (3) Component (III): 0.3 g 1,6-hexanediol diacrylate, and (4) 0.3 g propyl acetate, (5) 0.03 g Irgacure® 651 The uncured composition was coated on Fuji TAC (triacetylcellulose) film using a 1 mil (0.025 mm) doctor blade film applicator followed by purging with nitrogen for 2 min and then curing by UV lamp at 85 °C for 5 min. The resultant coating had a RVIS = 1.44 (vs. uncoated Fuji TAC), RMIN = 0.72, haze = 0.53, and scratched % = 100.

### Example 4

An uncured composition was formed containing: (1) Component (II): 0.04 g HO(Si(CH₃)(CH₂CH₂CF₃)O)ₓH (silanol terminated polytrifluoropropylmethylsiloxane, MW = 800-1200, FMS-9922, available from Gelest, Inc., Morrisville, PA), (2) Component (II): 0.02 g HO(Si(CH₃)(CH₂CH₂CF₃)O)_{y}H (silanol terminated polytrifluoropropylmethylsiloxane, MW = 550-800, FMS-9921 available from Gelest, Inc., Morrisville, PA), (3) Component (III): 0.05 g CH₂=CHC(O)OCH₂(CF₂)₄CH₂O(O)CCH=CH₂ (2,2,3,3,4,4,5,5-octafluoro-1,6-hexanediol diacrylate, MW = 370), (4) Component (III): 0.3 g 1,4-butanediol diacrylate, and (5) 0.3 g propyl acetate, (6) 0.03 g Irgacure® 651. The uncured composition was coated on Fuji TAC (triacetylcellulose) film using a 1 mil (0.025 mm) doctor blade film applicator followed by purging with nitrogen for 2 min and then curing by UV lamp at 85 °C for 5 min. The resultant coating had a RVIS = 1.32 (vs. 4.3 for uncoated Fuji TAC), RMIN = 0.83, haze = 0.84, and scratched % = 80.

### Example 5

An uncured composition was formed containing: (1) Component (II): 0.06 g HO(Si(CH₃)(CH₂CH₂CF₃)O)_{y}H (silanol terminated polytrifluoropropylmethylsiloxane, MW = 550-800, FMS-9921 available from Gelest, Inc., Morrisville, PA), (2) Component (III): 0.05 g F(CF₂)₈CH₂CH₂Si(OCH₂CH₃)₃, (3) Component (III): 0.3 g 1,3-butanediol diacrylate, and (4) 0.3 g propyl acetate, (5) 0.03 g Irgacure® 651. The uncured composition was coated on Fuji TAC (triacetylcellulose) film using a 1 mil (0.025 mm) doctor blade film applicator followed by purging with nitrogen for 2 min and then curing by UV lamp at 85 °C for 5 min. The resultant coating had a RVIS = 1.24 (vs.4.3 for uncoated Fuji TAC), RMIN = 0.98, haze = 0.74, and scratched % = 100.

### Example 6

An uncured composition was formed containing: (1) Component (II): 0.037 g HO(Si(CH₃)(CH₂CH₂CF₃)O)_{y}H (silanol terminated polytrifluoropropylmethylsiloxane, MW = 800-1200, FMS-9922 available from Gelest, Inc., Morrisville, PA), (2) Component (I): 0.015 g E10-DA, a perfluoropolyether diacrylate, Mn = 1200-1500 (available from Sartomer Company, Inc., Exton, PA, Product Code CN4000) (3) Component (III): 0.8 g 1,4-butanediol diacrylate, and (4) 0.8 g propyl acetate, (5) 0.08 g Irgacure® 651 The uncured composition was coated on Fuji TAC (triacetylcellulose) film using a 1 mil (0.025 mm) doctor blade film applicator followed by purging with nitrogen for 2 min and then curing by UV lamp at 85 °C for 5 min. The resultant coating had a RVIS = 1.89 (vs.4.3 for uncoated Fuji TAC), RMIN = 1.72, haze = 0.56, and scratched % = 21.

### Example 7

An uncured composition was formed containing: (1) Component (II): 0.05 g HO(Si(CH₃)(CH₂CH₂CF₃)O)yH (silanol terminated polytrifluoropropylmethylsiloxane, MW = 550-800, FMS-9921, available from Gelest, Inc., Morrisville, PA), (2) Component (I): 0.015 g E10-DA, a perfluoropolyether diacrylate, Mn = 1200-1500 (available from Sartomer Company, Inc., Exton, PA, Product Code CN4000) (3) Component (III): 0.8 g 1,3-butanediol diacrylate, and (4) 0.8 g propyl acetate, (5) 0.08 g Irgacure® 651. The uncured composition was coated on Fuji TAC (triacetylcellulose) film using a 1 mil doctor blade film applicator followed by purging with nitrogen for 2 min and then curing by UV lamp at 85 °C for 5 min. The resultant coating had a RVIS = 1.73 (vs.4.3 for uncoated Fuji TAC), RMIN = 1.72, haze = 0.24, and scratched % = 98.

## Claims

1. A composition comprising:
a) optionally a Component (I), wherein Component (I) is a fluorine-containing polymer having a weight average molecular weight from 600 to 100,000, optionally having reactive functional groups;
b) 0.1 % to 75% weight% of a Component (II), wherein Component (II) is a fluorine- and silicon-containing polymer having a weight average molecular weight from 600 to 100,000, having reactive functional groups, and is described by Formula (II): 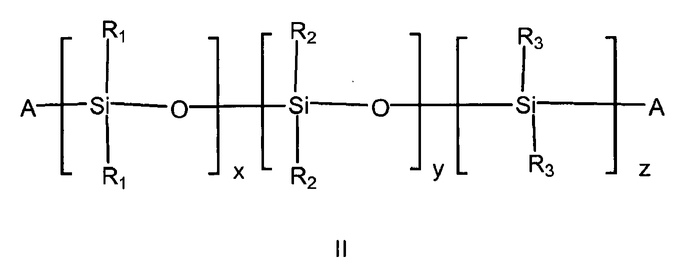 where A is a reactive functional group, R₁- R₃ are each independently a C₁-C₆ alkyl group, optionally containing ether linkages, wherein at least one R is at least partially fluorinated, and x, y, and z are integers indicating the number of repeat units in the polymer, wherein at least one of x, y, and z is greater than 0;
c) 5 to 99.9 weight% of a Component (III), wherein Component (III) is a reactive diluent having a weight average molecular weight less than 600 and having at least one functional group;
d) 0 to 20 weight% of a Component (IV), wherein Component (IV) is a fluorine-containing non-functional oligomer or polymer having a number average molecular weight less than 10,000; and
e) 0 to 80 weight% of a Component (V) comprising inorganic particles;
wherein 0.1 to 95 weight% of the composition is Component (II) and optionally Component (I), 5 to 99.9 weight% of the composition is Component (III), and the remainder of the composition being one or both of Components (IV) and (V), wherein all the weight percentages are based on the total weight of the Components (I) through (V), and with the proviso that Component (I) is not identical to Component (IV) when both are present.

2. The composition of Claim 1 wherein Component (I) is present at a weight% of 0.1 % to 2% and has a weight average molecular weight from 10,000 to 70,000.

3. The composition of Claim 1 wherein Component (II) is present at a weight% of 4% to 75% and has a weight average molecular weight from 600 to 3,000.

4. The composition of Claim 1 wherein Component (III) comprises Component (IIIa), wherein Component (IIIa) is a fluorine-containing reactive diluent having a weight average molecular weight less than 600 and having at least one functional group.

5. The composition of Claim 1 wherein Component (III) comprises Component (IIIb), wherein Component (IIIb) is a silicon-containing reactive diluent having a weight average molecular weight less than 600 and having at least one functional group.

6. The composition of Claim 1 wherein Component (III) comprises Component (IIIc), wherein Component (IIIc) is a fluorine- and silicone-containing reactive diluent having a weight average molecular weight less than 600 and having at least one functional group.

7. The composition of Claim 1 wherein Component (III) is present at a weight% of 15% to 80% and has a weight average molecular weight from 200 to less than 600.

8. The composition of Claim 1 wherein Component (IV) is present at a weight% of 5% to 13 % and has a number average molecular weight of 3,000 to 8,000 and is a perfluoropolyalkyl-ether oligomer or polymer.

9. The composition of Claim 1 wherein Component (V) is present at a weight% of 10% to 40 % and comprises conductive or semiconductive inorganic particles.

## Patentansprüche

1. Zusammensetzung umfassend:
a) wahlweise eine Komponente (I), wobei die Komponente (I) ein fluorhaltiges Polymer ist, das ein gewichtsdurchschnittliches Molekulargewicht von 600 bis 100.000 und wahlweise reaktive funktionelle Gruppen aufweist;
b) 0,1 bis 75 Gew.-% einer Komponente (II), wobei die Komponente (II) ein fluor- und siliciumhaltiges Polymer ist, das ein gewichtsdurchschnittliches Molekulargewicht von 600 bis 100.000 und wahlweise reaktive funktionelle Gruppen aufweist und durch die Formel (II) beschrieben ist: 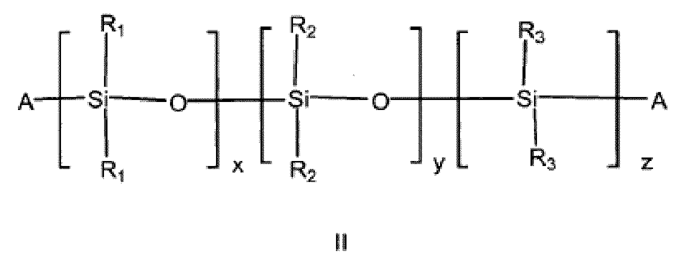 wobei A eine reaktive funktionelle Gruppe ist, R₁ - R₃ jeweils unabhängig eine C₁-C₃-Alkylgruppe sind, die wahlweise Etherverknüpfungen enthält, wobei mindestens ein R mindestens teilweise fluoriert ist und x, y und z ganze Zahlen sind, die die Anzahl von Wiederholungseinheiten in dem Polymer angeben, wobei mindestens eines von x, y und z mehr als 0 beträgt;
c) 5 bis 99,9 Gew.-% einer Komponente (III), wobei die Komponente (III) ein reaktives Verdünnungsmittel ist, das ein gewichtsdurchschnittliches Molekulargewicht von weniger als 600 und mindestens eine funktionelle Gruppe aufweist;
d) 0 bis 20 Gew.-% einer Komponente (IV), wobei die Komponente (IV) ein fluorhaltiges, nichtfunktionelles Oligomer oder Polymer ist, das ein zahlendurchschnittliches Molekulargewicht von weniger als 10.000 aufweist; und
e) 0 bis 80 Gew.-% einer Komponente (V), die anorganische Teilchen umfasst;
wobei 0,1 bis 95 Gew.-% der Zusammensetzung aus der Komponente (II) und wahlweise der Komponente (I) bestehen, 5 bis 99,9 Gew.-% der Zusammensetzung aus der Komponente (III) bestehen und der Rest der Zusammensetzung aus einer oder beiden der Komponenten (IV) und (V) besteht, wobei alle Gewichtsprozentsätze auf das Gesamtgewicht der Komponenten (I) bis (V) bezogen sind, und mit der Maßgabe, dass die Komponente (I) nicht mit der Komponente (IV) identisch ist, wenn beide vorliegen.

2. Zusammensetzung nach Anspruch 1, wobei die Komponente (I) in einem Gewichtsprozentsatz von 0,1 % bis 2 % vorliegt und ein gewichtsdurchschnittliches Molekulargewicht von 10.000 bis 70.00 aufweist.

3. Zusammensetzung nach Anspruch 1, wobei die Komponente (II) in einem Gewichtsprozentsatz von 4 % bis 75 % vorliegt und ein gewichtsdurchschnittliches Molekulargewicht von 600 bis 3.000 aufweist.

4. Zusammensetzung nach Anspruch 1, wobei die Komponente (III) eine Komponente (IIIa) umfasst, wobei die Komponente (IIIa) ein fluorhaltiges reaktives Verdünnungsmittel ist das ein gewichtsdurchschnittliches Molekulargewicht von weniger als 600 und mindestens eine funktionelle Gruppe aufweist.

5. Zusammensetzung nach Anspruch 1, wobei die Komponente (III) eine Komponente (IIIb) umfasst, wobei die Komponente (IIIb) ein siliciumhaltiges reaktives Verdünnungsmittel ist, das ein gewichtsdurchschnittliches Molekulargewicht von weniger als 600 und mindestens eine funktionelle Gruppe aufweist.

6. Zusammensetzung nach Anspruch 1, wobei die Komponente (III) eine Komponente (IIIc) umfasst, wobei die Komponente (IIIc) ein fluor- und siliciumhaltiges reaktives Verdünnungsmittel ist, das ein gewichtsdurchschnittliches Molekulargewicht von weniger als 600 und mindestens eine funktionelle Gruppe aufweist.

7. Zusammensetzung nach Anspruch 1, wobei die Komponente (III) in einem Gewichtsprozentsatz von 15 % bis 80 % vorliegt und ein gewichtsdurchschnittliches Molekulargewicht von 200 bis weniger als 600 aufweist.

8. Zusammensetzung nach Anspruch 1, wobei die Komponente (IV) in einem Gewichtsprozentsatz von 5 % bis 13 % vorliegt und ein zahlendurchschnittliches Molekulargewicht von 3.000 bis 8.000 aufweist und ein Perfluorpolyalkyletheroligomer oder -polymer ist.

9. Zusammensetzung nach Anspruch 1, wobei die Komponente (V) in einem Gewichtsprozentsatz von 10 % bis 40 % vorliegt und leitfähige oder halbleitende anorganische Teilchen umfasst.

## Revendications

1. Composition comprenant:
a) optionnellement un Composant (I), où le Composant (I) est un polymère contenant du fluor ayant un poids moléculaire moyen en poids de 600 à 100.000, possédant optionnellement des groupes fonctionnels réactifs;
b) de 0,1% à 75% en poids d'un Composant (II), où le Composant (II) est un polymère contenant du fluor et du silicium ayant un poids moléculaire moyen en poids de 600 à 100.000, possédant des groupes fonctionnels réactifs et il est décrit par la Formule (II): 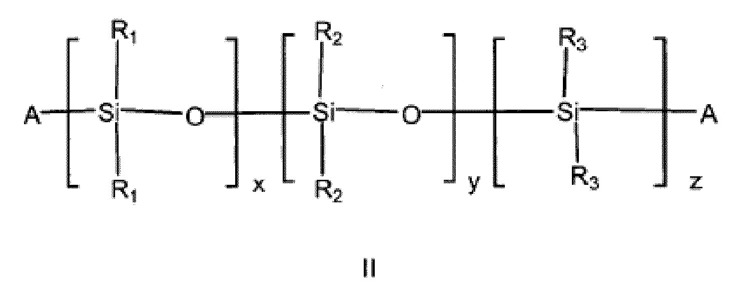 où A est un groupe fonctionnel réactif, R₁-R₃ sont chacun indépendamment un groupe C₁-C₆ alkyle, contenant optionnellement des liaisons éther, où au moins un R est au moins partiellement fluoré, et x, y et z sont des nombres entiers indiquant le nombre d'unités de répétition dans le polymère, où au moins un de x, y et z est supérieur à 0;
c) de 5 à 99,9% en poids d'un Composant (III), où le Composant (III) est un diluant réactif ayant un poids moléculaire moyen en poids de moins de 600 et possédant au moins un groupe fonctionnel;
d) de 0 à 20% en poids d'un Composant (IV), où le Composant (IV) est un oligomère ou un polymère non fonctionnel contenant du fluor ayant un poids moléculaire moyen en nombre de moins de 10.000; et
e) de 0 à 80% en poids d'un Composant (V) comprenant des particules inorganiques;
dans laquelle de 0,1 à 95% en poids de la composition est le Composant (II) et optionnellement le Composant (I), de 5 à 99,9% en poids de la composition est le Composant (III) et le reste de la composition étant un ou les deux des Composants (IV) et (V), où tous les pourcentages en poids sont basés sur le poids total des Composants (I) à (V) et sous réserve que le Composant (I) ne soit pas identique au Composant (IV) lorsque les deux sont présents.

2. Composition selon la revendication 1, dans laquelle le Composant (I) est présent à un % en poids de 0,1% à 2% et possède un poids moléculaire moyen en poids de 10.000 à 70.000.

3. Composition selon la revendication 1, dans laquelle le Composant (II) est présent à un % en poids de 4% à 75% et possède un poids moléculaire moyen en poids de 600 à 3.000.

4. Composition selon la revendication 1, dans laquelle le Composant (III) comprend le Composant (IIIa), où le Composant (IIIa) est un diluant réactif contenant du fluor ayant un poids moléculaire moyen en poids de moins de 600 et possédant au moins un groupe fonctionnel.

5. Composition selon la revendication 1, dans laquelle le Composant (III) comprend le Composant (IIIb), où le Composant (IIIb) est un diluant réactif contenant du silicium ayant un poids moléculaire moyen en poids de moins de 600 et possédant au moins un groupe fonctionnel.

6. Composition selon la revendication 1, dans laquelle le Composant (III) comprend le Composant (IIIc), où le Composant (IIIc) est un diluant réactif contenant du fluor et du silicium ayant un poids moléculaire moyen en poids de moins de 600 et possédant au moins un groupe fonctionnel.

7. Composition selon la revendication 1, dans laquelle le Composant (III) est présent à un % en poids de 15% à 80% et possède un poids moléculaire moyen en poids de 200 à moins de 600.

8. Composition selon la revendication 1, dans laquelle le Composant (IV) est présent à un % en poids de 5% à 13% et possède un poids moléculaire moyen en nombre de 3.000 à 8.000 et il est un oligomère ou un polymère de perfluoropolyalkyléther.

9. Composition selon la revendication 1, dans laquelle le Composant (V) est présent à un % en poids de 10% à 40% et comprend des particules inorganiques conductrices ou semi-conductrices.
